(19) Europäisches Patentamt
European Patent Office
Office européen des brevets

(11) **EP 2 454 604 B1**

(12) **EUROPÄISCHE PATENTSCHRIFT**

(45) Veröffentlichungstag und Bekanntmachung des Hinweises auf die Patenterteilung:
**08.06.2016 Patentblatt 2016/23**

(51) Int Cl.:
***G01S 5/02*** *(2006.01)*    ***G01S 5/14*** *(2006.01)*
***G01S 13/46*** *(2006.01)*

(21) Anmeldenummer: **10737311.0**

(22) Anmeldetag: **16.07.2010**

(86) Internationale Anmeldenummer:
**PCT/EP2010/060343**

(87) Internationale Veröffentlichungsnummer:
**WO 2011/006998 (20.01.2011 Gazette 2011/03)**

(54) **VERFAHREN ZUR KALIBRIERUNG EINES LAUFZEITBASIERTEN LOKALISATIONSSYSTEMS**

METHOD FOR CALIBRATING A PROPAGATION-TIME-BASED LOCALIZATION SYSTEM

PROCÉDÉ DE CALIBRAGE D'UN SYSTÈME DE LOCALISATION BASÉ SUR LE TEMPS DE PROPAGATION

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **17.07.2009 DE 102009033603**

(43) Veröffentlichungstag der Anmeldung:
**23.05.2012 Patentblatt 2012/21**

(73) Patentinhaber: **Siemens Aktiengesellschaft 80333 München (DE)**

(72) Erfinder:
• **MARCHENKO, Maksym**
 **81373 München (DE)**
• **RAMIREZ, Alejandro**
 **80797 München (DE)**
• **SCHWINGENSCHLÖGL, Christian**
 **85640 Putzbrunn (DE)**

(56) Entgegenhaltungen:
WO-A2-2010/059934    DE-A1-102006 045 350
DE-A1-102008 021 614    US-A1- 2003 001 777

• **BAHILLO A ET AL: "IEEE 802.11 Distance Estimation Based on RTS/CTS Two-Frame Exchange Mechanism" 2009 IEEE 69TH VEHICULAR TECHNOLOGY CONFERENCE; APRIL 26-29, 2009, BARCELONA, SPAIN, IEEE, PISCATAWAY, NJ, USA, 26. April 2009 (2009-04-26), Seiten 1-5, XP031474530 ISBN: 978-1-4244-2517-4**
• **IZQUIERDO F ET AL: "Performance evaluation of a TOA-based trilateration method to locate terminals in WLAN" INTERNATIONAL SYMPOSIUM ON WIRELESS PERVASIVE COMPUTING, XX, XX, Bd. 2006, 16. Januar 2006 (2006-01-16), Seiten 1-6, XP002467036**
• **SANG YOUNG PARK ET AL: "Round-trip time-based wireless positioning without time synchronization" CONTROL, AUTOMATION AND SYSTEMS, 2007. ICCAS '07. INTERNATIONAL CONFERENCE ON, IEEE, PISCATAWAY, NJ, USA, 17. Oktober 2007 (2007-10-17), Seiten 2323-2326, XP031223939 ISBN: 978-89-950038-6-2**

## Beschreibung

Die Erfindung betrifft ein Verfahren zur Kalibrierung eines laufzeitbasierten Lokalisationssystems sowie ein entsprechendes Lokalisationssystem.

Aus dem Stand der Technik sind verschiedene Verfahren bzw. Systeme zur Lokalisation von mobilen Objekten basierend auf drahtlos übermittelten Signalen bekannt. Insbesondere gibt es feldstärkebasierte Verfahren, bei denen über die Feldstärke von zwischen einem mobilen Objekt und verschiedenen Basisstationen ausgetauschten Radiosignalen oder Schallsignalen der Ort des mobilen Objekts bestimmt wird. Darüber hinaus sind sog. laufzeitbasierte Verfahren bekannt, bei denen über Laufzeiten von Signalen zwischen jeweiligen Basisstationen und dem Objekt dessen Position ermittelt wird.

Zur genauen Positionsbestimmung müssen Lokalisationssysteme geeignet kalibriert werden. Üblicherweise läuft eine Kalibrierung dabei derart ab, dass das mobile Objekt an eine Vielzahl von bekannten Positionen angeordnet wird und an der jeweiligen Position die entsprechenden Feldstärken gemessen werden. Auf diese Weise erhält man eine Karte mit entsprechenden gemessenen Feldstärken an einer Vielzahl von Punkten, wobei bei der Lokalisation dann durch den Vergleich der aktuellen Messungen mit den entsprechenden Werten aus der Karte die Position ermittelt werden kann. Diese manuellen Kalibrierungsverfahren sind aufwändig und müssen von Experten durchgeführt werden, da bei der Kalibrierung das mobile Objekt in vorbestimmte Positionen angeordnet werden muss. Aus dem Stand der Technik sind auch automatische Kalibrierungsverfahren bekannt, jedoch sind diese Verfahren sehr aufwändig und verwenden komplexe Algorithmen.

Die Druckschrift DE 10 2006 045 350 A1 beschreibt ein Verfahren zur Abstandsermittlung zwischen Netzknoten in einem Nachrichtennetzwerk, wobei für eine Mehrzahl von vorbekannten Abständen zwischen einem Sender-Netzknoten und einem Empfänger-Netzknoten Gesamtlaufzeiten von ausgesendeten und empfangenen Hin- und Rücksignalen erfasst werden und hieraus eine Gesamtlaufzeit-Abstand-Relation bestimmt wird.

In den Druckschriften Bahillo A. et al. "IEEE 802.11 Distance Estimation Based on RTS/CTS Two-Frame Exchange Mechanism", 2009 IEEE 69th Vehicular Technology Conference; April 26-29, 2009, Barcelona, Spain, IEEE, Piscataway, NJ, USA, 26. April 2009 (2009-04-26), Seiten 1-5, und Izquierdo F. et al. "Performance evaluation of a TOA-based trilateration method to locate terminals in WLAN", International Symposium on wireless pervasive computing, XX, XX, Bd. 2006, 16. Januar 2006 (2006-01-16), Seiten 1-6, werden Lokalisationsverfahren beschrieben, welche den Abstand eines mobilen Objekts zu Basis-stationen in einem WLAN-Netz über die Ermittlung von Laufzeiten von Funksignalen bestimmen.

Aufgabe der Erfindung ist es, ein einfaches und schnell durchzuführendes Verfahren zur Kalibrierung eines laufzeitbasierten Lokalisationssystems zu schaffen.

Diese Aufgabe wird durch das Verfahren gemäß Patentanspruch 1 bzw. Patentanspruch 10 bzw. durch das Lokalisationssystem gemäß Patentanspruch 16 gelöst. Weiterbildungen der Erfindung sind in den abhängigen Ansprüchen definiert.

In dem erfindungsgemäßen Verfahren wird ein Lokalisationssystem kalibriert, bei dem über die Erfassung von laufzeitbasierten Größen von mehreren Basisstationen eines Funknetzes die Position eines mobilen Objekts in einer vorbestimmten Umgebung bestimmbar ist. Die laufzeitbasierte Größe einer jeweiligen Basisstation repräsentiert dabei die Laufzeit von Signalen zwischen einer Funkeinheit des mobilen Objekts und der jeweiligen Basisstation. Die laufzeitbasierte Größe ist somit eine Größe, welche die Laufzeit selbst sein kann bzw. eine Größe, welche von dieser Laufzeit abhängt. Der Begriff der Basisstation ist dabei weit zu verstehen und umfasst jede Funkeinheit in einem Funknetz, welche bei der Lokalisation des mobilen Objekts stationär an einer festen Position angeordnet ist. Unter Funkeinheit im Sinne der Erfindung ist dabei eine Sende- und/oder Empfangseinheit in dem entsprechenden Funknetz zu verstehen.

Das erfindungsgemäß zu kalibrierende Lokalisationssystem kann sowohl zur zweidimensionalen Positionsbestimmung eines mobilen Objekts als auch zur dreidimensionalen Positionsbestimmung eingesetzt werden. Die vorbestimmte Umgebung, in der die Lokalisation stattfindet, kann verschieden ausgestaltet sein, sollte jedoch vorzugsweise konvex sein. Beispielsweise kann die vorbestimmte Umgebung bei einer zweidimensionalen Lokalisation rechteckförmig und bei einer dreidimensionalen Lokalisation quaderförmig sein. In einer bevorzugten Variante sind ferner die einzelnen Basisstationen am Rande der vorbestimmten Umgebung angeordnet.

In einer ersten Variante des erfindungsgemäßen Verfahrens wird in einem Schritt a) das mobile Objekt in der vorbestimmten Umgebung bewegt, wobei während dieser Bewegung zu einer Mehrzahl von Messzeitpunkten die laufzeitbasierten Größen der jeweiligen Basisstationen erfasst werden. Dabei müssen die Positionen des mobilen Objekts zu den jeweiligen Messzeitpunkten nicht bekannt sein. In einem Schritt b) wird dabei der Minimalwert der laufzeitbasierten Größen einer jeweiligen Basisstation einem vorgegebenen Minimalabstand des mobilen Objekts zu der jeweiligen Basisstation zugeordnet. Analog wird auch der Maximalwert der laufzeitbasierten Größen einer jeweiligen Basisstation einem vorgegebenen Maximalabstand des mobilen Objekts zu der jeweiligen Basisstation zugeordnet. In dem Verfahren ist somit von der vorbestimmten Umgebung vorab bekannt, welche minimalen bzw. maximalen Abstände ein mobiles Objekt zu den einzelnen Basisstationen bei dessen Bewegung in der Umgebung annehmen kann.

In einem Schritt c) wird in dem erfindungsgemäßen Verfahren für eine jeweilige Basisstation eine vorgegebene Abhängigkeit zwischen den Abständen des mobilen Objekts zu der jeweiligen Basisstation und den laufzeitbasierten Größen der jeweiligen Basisstation auf die in Schritt b) durchgeführte Zuordnung des Minimalwerts zu dem Minimalabstand und des Maximalwerts zu dem Maximalabstand skaliert. Das heißt, in dem Verfahren ist vorab eine (unskalierte) Abhängigkeit zwischen den Abständen und den laufzeitbasierten Größen gegeben, wobei erfindungsgemäß die Abhängigkeit derart angepasst wird, dass sie am Minimalabstand den entsprechend zugeordnete Minimalwert der laufzeitbasierten Größe und am Maximalabstand den entsprechend zugeordneten Maximalwert der laufzeitbasierten Größe liefert. Die derart bestimmte skalierte Abhängigkeit dient dann bei einer Positionsbestimmung des mobilen Objekts zur Ermittlung der Abstände des mobilen Objekts zu den Basisstationen aus den laufzeitbasierten Größen.

Erfindungsgemäß macht man sich die Erkenntnis zunutze, dass ein von der aktuellen Lokalisationsumgebung unabhängiger Kurvenverlauf existiert, der den Zusammenhang zwischen dem Abstand des mobilen Objekts zu einer Basisstation und der laufzeitbasierten Größe beschreibt. Diese vorgegebene Abhängigkeit kann dabei vorab für jede Basisstation, beispielsweise bereits bei der Fertigung der Basisstation, bestimmt werden. Durch eine geeignete Skalierung dieser Abhängigkeit wird dann eine einfache Kalibration ermöglicht, bei der die Position des mobilen Objekts zu den Messzeitpunkten, an denen die laufzeitbasierten Größen erfasst werden, nicht bekannt sein muss.

In einer besonders bevorzugten Ausführungsform des erfindungsgemäßen Verfahrens ist die vorgegebene Abhängigkeit als eine funktionale Abhängigkeit mit einem oder mehreren freien Parametern gegeben, wobei bei der Skalierung die freien Parameter an die Zuordnung des Minimalwerts zum Minimalabstand und des Maximalwerts zum Maximalabstand angepasst werden. Beispielsweise kann die Abhängigkeit durch eine Geradengleichung beschrieben sein, bei der die Steigung und der Versatz in Richtung der Ordinate nicht bekannt sind. Mit Hilfe der Zuordnung des entsprechenden Maximal- und Minimalabstands zu den entsprechenden Maximal- und Minimalwerten können dann die Steigung und der Versatz ermittelt werden, woraus eine eindeutige Geradengleichung erhalten wird, welche dann eine skalierte Abhängigkeit im Sinne der Erfindung darstellt.

Die vorgegebene Abhängigkeit zwischen den Abständen und den laufzeitbasierten Größen einer jeweiligen Basisstation kann beliebig ausgestaltet sein, insbesondere kann sie linear oder logarithmisch sein oder durch ein Polynom repräsentiert werden. Die Abhängigkeit kann beispielsweise aus einer Mehrzahl von gemessenen laufzeitbasierten Größen an bekannte Abständen eines mobilen Objekts zu einer Basisstation mittels einer Approximation einer Funktion an die Messwerte bestimmt worden sein, beispielsweise mittels einer Interpolation.

Um mit dem erfindungsgemäßen Verfahren eine genaue und eindeutige Positionsbestimmung zu gewährleisten, werden vorzugsweise die laufzeitbasierten Größen von mindestens drei Basisstationen erfasst. Je mehr Basisstationen in dem Verfahren verwendet werden, desto genauer wird das Verfahren, und die gemessenen laufzeitbasierten Größen können gegebenenfalls gegeneinander plausibilisiert werden.

In einer weiteren, besonders bevorzugten Ausführungsform wird als laufzeitbasierte Größe die Hin- und Rückflugzeit von Signalen von der Basisstation zur Funkeinheit des mobilen Objekts und von dort zurück zur Basisstation verwendet. Das heißt, eine laufzeitbasierte Größe entspricht der Zeitspanne, welche ab dem Aussenden eines Anforderungssignals von der jeweiligen Basisstation an die Funkeinheit des mobilen Objekts bis zum Empfang eines von der Funkeinheit in Antwort auf das Anforderungssignal ausgesendeten Antwortsignals bei der jeweiligen Basisstation vergeht.

In dem erfindungsgemäßen Verfahren können für das Funknetz beliebige bekannte Standards verwendet werden. Beispielsweise kann das Funknetz auf einem WLAN-Standard, d.h. auf einem Standard aus der IEEE 802.11-Familie, oder auf einem RFID-Standard (RFID = Radio Frequency Identification) beruhen. Bei dem letztgenannten Standard stellt eine Basisstation insbesondere ein entsprechendes Lesegerät dar, welches Signale an einen RFID-Transponder auf dem mobilen Objekt aussendet und von diesem empfängt.

In einer besonders bevorzugten Ausführungsform des erfindungsgemäßen Verfahrens erfolgt die Kalibrierung iterativ während der Bewegung des Objekts, wobei in jedem Iterationsschritt die Mehrzahl von Messzeitpunkten um die seit dem letzten Iterationsschritt hinzugekommenen Messzeitpunkte mit entsprechend erfassten laufzeitbasierten Größen ergänzt wird und basierend auf der sich daraus ergebenden neuen Mehrzahl von Messpunkten die oben beschriebenen Schritte b) und c) durchgeführt werden, wobei der Schritt c) insbesondere nur dann durchgeführt wird, wenn sich ein neuer Minimal- bzw. Maximalwert im Vergleich zum letzten Iterationsschritt ergibt. Gegebenenfalls besteht jedoch auch die Möglichkeit, dass zunächst nur die entsprechenden laufzeitbasierten Größen bei der Bewegung des mobilen Objekts in der vorbestimmten Umgebung gemessen werden und erst anschließend basierend auf den laufzeitbasierten Größen die Schritte b) und c) durchgeführt werden.

Neben dem oben beschriebenen Kalibrierungsverfahren umfasst die Erfindung ferner ein Verfahren zur Lokalisation eines mobilen Objekts mit einem laufzeitbasierten Lokalisationssystem, wobei das Lokalisationssystem mit dem erfindungsgemäßen Verfahren kalibriert wird und die bei der Kalibrierung bestimmte skalierte Abhängigkeit bei der Positionsbestimmung des mobilen Objekts zur Ermittlung der Abstände des mobilen Objekts zu den Basisstationen aus den laufzeitbasierten Größen verwendet wird. Die Positionsbestimmung erfolgt dabei z.B. mittels Multilateration (z.B. Trilateration) basierend auf den ermittelten Abständen des mobilen Objekts zu den Basisstationen. Ebenso kann das in der deutschen Patentanmeldung mit der Nr. 10 2008 004 257.9 bzw. das in der PCT-Anmeldung PCT/EP2008/068162 beschriebene Verfahren zur Positionsbestimmung verwendet werden. Vorzugsweise wird dieses Verfahren mit dem oben beschriebenen iterativen Kalibrierungsverfahren derart kombiniert, dass während der Kalibrierung eine Positionsbestimmung des mobilen Objekts für zumindest einen Teil der Messzeitpunkte mit Hilfe der im aktuellen Iterationsschritt bestimmten skalierten Abhängigkeit durchgeführt wird. Auf diese Weise kann parallel zur Kalibrierung auch gleichzeitig eine Lokalisation durchgeführt werden.

Die eingangs erwähnte Aufgabe der Erfindung wird gemäß einer zweiten Variante des erfindungsgemäßen Verfahrens mittels einer Kalibrierung an einer vorgegebenen Position innerhalb der vorbestimmten Umgebung gelöst. Dabei wird das mobile Objekt an die vorgegebene Position in der Umgebung bewegt, wobei an der vorgegebenen Position die Abstände des mobilen Objekts zu den Basisstationen bekannt und zumindest teilweise unterschiedlich sind. Dabei werden an der vorgegebenen Position die laufzeitbasierten Größen der jeweiligen Basisstationen erfasst. Schließlich wird basierend auf den erfassten laufzeitbasierten Größen und den bekannten Abständen des mobilen Objekts zu den jeweiligen Basisstationen eine Abhängigkeit zwischen den Abständen des mobilen Objekts zu einer jeweiligen Basisstation und den laufzeitbasierten Größen der jeweiligen Basisstation ermittelt, wobei die Abhängigkeit bei der Positionsbestimmung des mobilen Objekts zur Ermittlung der Abstände des mobilen Objekts zu den Basisstationen aus den laufzeitbasierten Größen dient.

Diese Variante der Erfindung hat den besonderen Vorteil, dass eine einfache Kalibrierung durch lediglich einen Messvorgang an einer einzelnen vorbekannten Position erreicht werden kann. In dieser Variante wird davon ausgegangen, dass die einzelnen Basisstationen die gleichen Eigenschaften im Sinne einer identischen Abhängigkeit zwischen den Abständen des mobilen Objekts zu der Basisstation und den laufzeitbasierten Größen aufweisen. Auf diese Weise kann eine einzige Abhängigkeit durch gemessene laufzeitbasierte Größen von verschiedenen Basisstationen für mehrere unterschiedliche Abstände ermittelt werden. Dabei ist die Abhängigkeit vorzugsweise eine mittels Approximation (z.B. Interpolation) bestimmte Funktion, welche durch die erfassten laufzeitbasierten Größen an den bekannten Abständen des mobilen Objekts zu den jeweiligen Basisstationen verläuft.

In Analogie zu der ersten Variante werden auch bei der zweiten Variante vorzugsweise mindestens drei Basisstationen zur Lokalisation verwendet. Ebenso werden als laufzeitbasierte Größen insbesondere die Hin- und Rücklaufzeiten von Signalen von der Basisstation zum mobilen Objekt und zurück verwendet. Auch wird als Funknetz vorzugsweise ein Funknetz basierend auf einem WLAN-Standard oder einem RFID-Standard eingesetzt.

Neben dem gerade beschriebenen Kalibrierungsverfahren gemäß einer zweiten Variante der Erfindung betrifft die Erfindung darüber hinaus ein Verfahren zur Lokalisation eines mobilen Objekts, wobei das Lokalisationssystem mit dem gerade beschriebenen Verfahren kalibriert wird und die bei der Kalibrierung bestimmte Abhängigkeit bei der Positionsbestimmung des mobilen Objekts zur Ermittlung der Abstände des mobilen Objekts zu den Basisstationen aus den laufzeitbasierten Größen verwendet wird.

Neben den oben beschriebenen Verfahren umfasst die Erfindung ferner ein Lokalisationssystem mit einer Erfassung- und Auswerteeinheit, mit der über die Erfassung von laufzeitbasierten Größen von mehreren Basisstationen eines Funknetzes die Position des mobilen Objekts in einer vorbestimmten Umgebung bestimmbar ist, wobei die laufzeitbasierte Größe einer jeweiligen Basisstation die Laufzeit von Signalen zwischen einer Funkeinheit des mobilen Objekts und der jeweiligen Basisstation repräsentiert. Dabei ist die Erfassungs- und Auswerteeinrichtung derart ausgestaltet, dass damit das erfindungsgemäße Verfahren gemäß jeder der oben beschriebenen Varianten durchführbar ist.

Ausführungsbeispiele der Erfindung werden nachfolgend anhand der beigefügten Figuren detailliert beschrieben.

Es zeigen:

Fig. 1 eine Draufsicht auf eine Umgebung mit einer Mehrzahl von Basisstationen, in der eine Lokalisation nach einer Ausführungsform des erfindungsgemäßen Verfahrens durchgeführt werden kann;

Fig. 2 eine schematische Darstellung, welche die Bestimmung einer laufzeitbasierten Größe gemäß einer Ausführungsform der Erfindung verdeutlicht;

Fig. 3 ein Diagramm, welches ein Beispiel einer Abhängigkeit zwischen den Abständen einer Basisstation zu einem mobilen Objekt und den laufzeitbasierten Größen zeigt;

Fig. 4 ein Diagramm analog zu Fig. 3, in dem die Bestimmung einer aktuellen Position eines mobilen Objekts verdeutlicht ist; und

Fig. 5 eine Benutzeroberfläche, welche in einer Ausführungsform eines erfindungsgemäßen Lokalisierungssystems die Positionsbestimmung eines mobilen Objekts für einen Benutzer visualisiert.

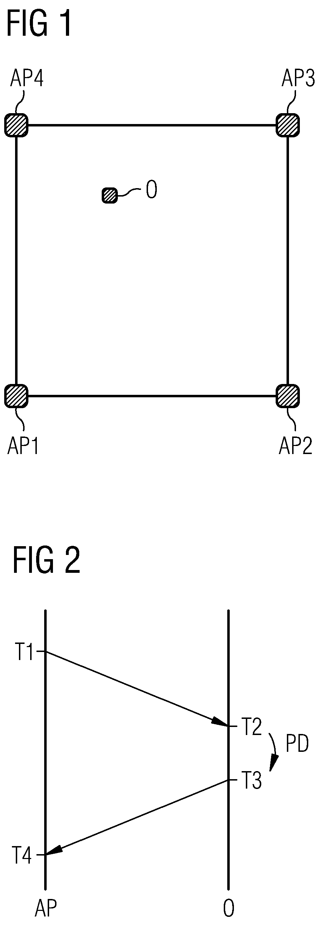

Nachfolgend werden Ausführungsformen des erfindungsgemäßen Verfahrens am Beispiel eines Lokalisierungssystems zur zweidimensionalen Positionsbestimmung eines mobilen Objekts in einer geschlossenen Umgebung innerhalb eines Gebäudes beschrieben. Fig. 1 zeigt in Draufsicht ein Beispiel einer solchen Umgebung in der Form eines quadratischen Raums bzw. einer quadratischen Halle. Bei der Umgebung der Fig. 1 kann es sich beispielsweise um einen Parkplatz innerhalb eines Gebäudes handeln und die Seitenlängen der quadratischen Umgebung können z.B. 100 m betragen. In jedem Eck der Umgebung ist eine Basisstation eines Funknetzes vorgesehen. Diese Basisstationen sind in Fig. 1 mit dem Bezugszeichen AP1, AP2, AP3 und AP4 bezeichnet. Die Basisstationen sind stationär in der Umgebung angeordnet und senden bzw. empfangen Signale gemäß einem Funkstandard. Als Funkstandard kommen dabei insbesondere Standards auf dem MAC-Layer des OSI-Referenzmodells in Betracht, beispielsweise ein WLAN- bzw. RFID-Standard. Gegebenenfalls können auch beliebige andere Standards realisiert werden. Entscheidend ist vielmehr, dass die Reichweite der Signale der Basisstationen derart ist, dass die Signale von mobilen Objekten innerhalb der Umgebung empfangen werden können.

In dem Szenario der Fig. 1 ist ferner schematisch ein sich in der Umgebung bewegendes mobiles Objekt 0 wiedergegeben, welches über eine entsprechende Funkeinheit verfügt, die nach dem gleichen Standard wie die Basisstationen AP1 bis AP4 arbeitet. Das mobile Objekt kann dabei beispielsweise eine tragbare Einrichtung (z.B. ein PDA oder ein Mobiltelefon) sein, welche über eine entsprechende drahtlose Schnittstelle zur Kommunikation mit den Basisstationen verfügt. Das mobile Objekt kann sich beliebig innerhalb der quadratischen Umgebung bewegen. Zur Umsetzung des erfindungsgemäßen Verfahrens sind die Abmessungen der Umgebung bekannt, so dass der maximale Abstand des mobilen Objekts zu jeder der Basisstationen vorab berechnet werden kann. Ebenso ist der kleinste Abstand des mobilen Objekts zu jeder der Basisstationen bekannt, wobei z.B. angenommen werden kann, dass dieser Abstand typischerweise zwischen 1 m und 2 m liegt, da die Basisstationen üblicherweise ungefähr 2 m bis 3 m über dem Boden installiert sind.

In einer ersten Variante des erfindungsgemäßen Verfahrens bewegt sich das mobile Objekt kontinuierlich innerhalb der vorbestimmten Umgebung und es werden dabei in regelmäßigen zeitlichen Abständen auf den Signalen der Basisstationen bzw. der Funkeinheit des mobilen Objekts basierende laufzeitbasierte Größen ermittelt. Mit Hilfe dieser Größen kann dann ein Lokalisationssystem zur Bestimmung der Position des Objekts innerhalb der Umgebung kalibriert werden, wie nachfolgend noch näher beschrieben wird. Als laufzeitbasierte Größe wird für die einzelnen Basisstationen in den hier beschriebenen Ausführungsformen die sog. "Round-Trip-Time" (im Folgenden auch als Hin- und Rückflugzeit bzw. RTT bezeichnet) gemessen, welche basierend auf einem Ping-Pong-Prozess bestimmt wird, der schematisch in Fig. 2 wiedergegeben ist. Dabei ist in Fig. 2 in vertikaler Richtung die Zeitachse aufgetragen, wobei die linke vertikale Linie AP die Ereignisse bei einer der Basisstationen und die rechte vertikale Linie 0 die Ereignisse bei dem mobilen Objekt verdeutlichen. Zur Bestimmung der Hin- und Rückflugzeit sendet eine Basisstation zum Zeitpunkt T1 ein Datenpaket aus, welches von der Funkeinheit des mobilen Objekts zum Zeitpunkt T2 empfangen wird. Das Datenpaket stellt dabei ein in dem entsprechenden Funkstandard verwendetes Anforderungspaket dar, welches von dem mobilen Objekt mit einem Antwortpaket in der Form eines Acknowledgements beantwortet wird. Bis zum Aussenden des Antwortpakets benötigt das mobile Objekt eine vorbestimmte Verarbeitungszeit, welche in Fig. 2 als PD (PD = Processing Delay) bezeichnet ist. Nach der Verarbeitung wird dann zum Zeitpunkt T3 durch die Funkeinheit des mobilen Objekts das Antwortpaket ausgesendet, das zum Zeitpunkt T4 wieder bei der entsprechenden Basisstation empfangen wird. Mittels entsprechender Zeitstempel in den Paketen kann dann die Flugzeit RTT = T4 - T1 ermittelt werden. Da sich die Signale annähernd mit Lichtgeschwindigkeit c bewegen, kann prinzipiell und unter idealen Bedingungen bei bekannter Verarbeitungszeit PD der Abstand d zwischen Basisstation und mobilem Objekt wie folgt bestimmt werden:

$$d = c \cdot (T4 - T1 - PD)/2 \qquad (1)$$

Die Verarbeitungszeit PD ist dabei wesentlich größer als die Flugzeit des Signals. Ferner kann die Verarbeitungszeit stark von den verwendeten Hardwarekomponenten der Funkeinheit im mobilen Objekt abhängen. Insbesondere ist die Verarbeitungszeit für Hardwarekomponenten unterschiedlicher Hersteller meist verschieden und selbst zwischen unterschiedlichen Modellen des gleichen Herstellers ergeben sich verschiedene Verarbeitungszeiten. Aus diesem Grund ist die Bestimmung des Abstands zwischen mobilem Objekt und Basisstation gemäß der obigen Formel mit Standard-Hardwarekomponenten schwierig. In den nachfolgend beschriebenen Ausführungsformen des erfindungsgemäßen Verfahrens wird dieser Nachteil dadurch behoben, dass bei der Kalibrierung des Lokalisationssystems und der anschließend durchgeführten Positionsbestimmung die Verarbeitungszeit PD nicht bekannt sein muss. Es muss lediglich die Hin- und Rückflugzeit RTT bei der Kalibrierung bzw. Lokalisation des mobilen Objekts als Eingangsgröße erfasst werden.

Im Folgenden wird zunächst eine Variante des erfindungsgemäßen Verfahrens beschrieben, bei der gleichzeitig eine Kalibrierung und eine Lokalisation des mobilen Objekts durchgeführt werden. Es wird dabei davon ausgegangen, dass sich das mobile Objekt über längere Zeit in der vorbestimmten Umgebung bewegt und dabei in Bezug auf jede der Basisstationen ein oder mehrere Male Positionen einnimmt, bei denen der Abstand zu der jeweiligen Basisstation maximal bzw. minimal ist. Bei der Bewegung des mobilen Objekts werden dabei kontinuierlich die entsprechenden Flugzeiten RTT gemäß dem obigen Ping-Pong-Prozess von jeder der Basisstationen gemessen. Es ist dabei im Vergleich zum Stand der Technik von Vorteil, dass bei der Kalibrierung zu den Messzeitpunkten, an denen RTT gemessen wird, nicht die Position des mobilen Objekts innerhalb der Umgebung bekannt sein muss. Die Kalibrierung muss deshalb nicht durch speziell geschultes Personal durchgeführt werden, welches sich schrittweise durch die vorbestimmte Umgebung bewegt und sich mit dem mobilen Objekt an vorbestimmte bekannte Positionen stellt, an denen dann die jeweiligen Zeiten RTT gemessen werden. Vielmehr kann das mobile Objekt beliebigen Personen gegeben werden, welche sich für längere Zeit in der vorbestimmten Umgebung bewegen, wobei die Kalibrierung automatisch abläuft, ohne dass die entsprechende Person überhaupt hiervon in Kenntnis gesetzt werden muss.

Zur Umsetzung des erfindungsgemäßen Verfahrens macht man sich die Tatsache zunutze, dass eine funktionale Abhängigkeit zwischen dem Abstand des mobilen Objekts zu der jeweiligen Basisstation und der Hin- und Rückflugzeit RTT besteht. Diese Abhängigkeit ist vorbekannt. Sie hängt dabei nicht von der Umgebung ab, in der die Basisstationen installiert sind, und kann vorab beispielsweise in der Fabrik ermittelt werden, in der die Basisstationen hergestellt werden. Die entsprechende Abhängigkeit kann dabei für jede der einzelnen Basisstationen unterschiedlich sein. Insbesondere kann z.B. eine lineare Abhängigkeit zwischen dem Abstand d des mobilen Objekts von der Basisstation und der entsprechenden Flugzeit RTT angenommen werden (siehe Gleichung (1)). Zur Erreichung von genaueren Ergebnissen sollte die Abhängigkeit jedoch besser modelliert werden, da es sich in der Praxis gezeigt hat, dass sich aufgrund von Signalreflexionen die Flugzeit nicht immer linear verhält. Insbesondere wenn die Basisstationen nach dem RFID-Standard arbeiten, ergibt sich eine logarithmische Abhängigkeit zwischen der Distanz d und der Zeit RTT.

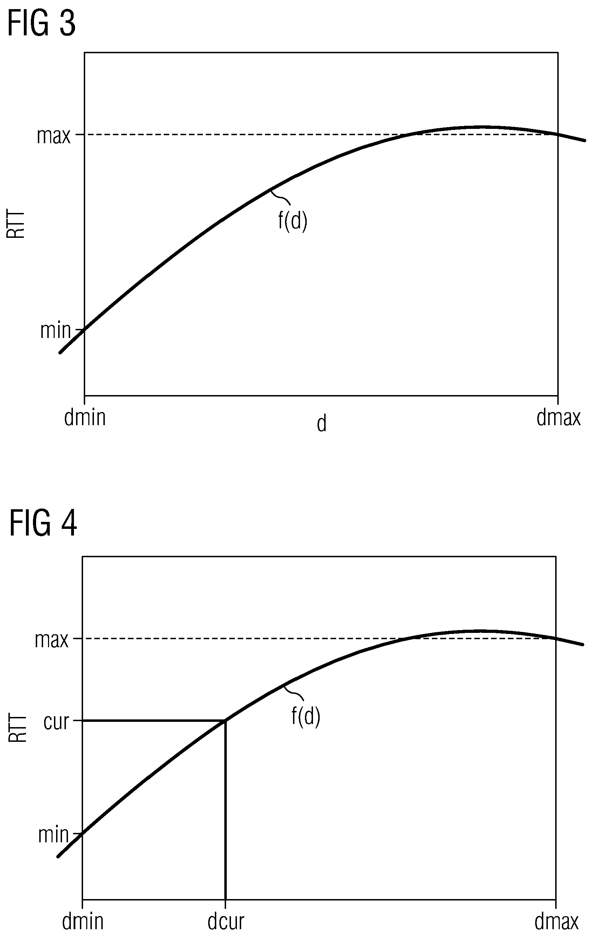

Fig. 3 zeigt ein Beispiel einer Abhängigkeit der Flugzeit RTT von einem Abstand d eines mobilen Objekts zu einer Basisstation. Die Abstände d sind dabei die Abstände in der entsprechenden zweidimensionalen Umgebung, in der sich das Objekt bewegt. Es existiert dabei ein minimaler Abstand dmin und ein maximaler Abstand dmax, wobei in dem Szenario der Fig. 1 dmin = 0 m und dmax = 100 m angenommen werden kann. Die entsprechenden Laufzeiten an der Position dmin und dmax sind in Fig. 3 dabei mit min und max bezeichnet. Der Verlauf der Laufzeit RTT in Abhängigkeit vom Abstand d ist mit f(d) bezeichnet. In der hier beschriebenen Variante der Erfindung ist zu Beginn der Kalibrierung für jede Basisstation eine unskalierte funktionale Abhängigkeit zwischen d und RTT bekannt, d.h. f(d) liegt als Funktion mit mehreren noch unbestimmten bzw. anzupassenden Parametern vor. Betrachtet man beispielsweise eine lineare Abhängigkeit, so gilt f(d) = a · d + b, wobei die Parameter a und b noch nicht bestimmt bzw. skaliert sind und während der nachfolgend beschriebenen Kalibrierung ermittelt werden. f(d) kann auch auf beliebig anders ausgestaltet sein, beispielsweise kann es sich um ein Polynom handeln, welches durch Interpolation von vorab durchgeführten Messungen zur Bestimmung des funktionalen Zusammenhangs zwischen d und RTT ermittelt wurde. Wie bereits oben erwähnt, kann der funktionale Zusammenhang zwischen d und RTT auch durch eine logarithmische Funktion beschrieben sein.

Das mobile Objekt 0 bewegt sich bei der Kalibrierung in der vorbestimmten Umgebung. Zu einer Vielzahl von Messzeitpunkten wird dabei die Flugzeit RTT für jede der Basisstationen erfasst und aus den erfassten Werten werden kontinuierlich der Minimalwert und der Maximalwert der Flugzeiten ausgewählt. Basierend auf den aktuellen minimalen und maximalen Werten wird dann die funktionale Abhängigkeit f(d) geeignet skaliert. Die Skalierung erfolgt dabei derart, dass der Minimalwert der Flugzeit RTT am minimalen Abstand dmin und der Maximalwert der Flugzeit RTT am maximalen Abstand dmax auftritt, wobei minimaler und maximaler Abstand durch die vorbestimmte Umgebung vorgegeben sind. Es wird somit eine entsprechende Bestimmung freier Parameter der Funktion f(d) durchgeführt, wodurch eine feste, an den Anwendungsfall angepasste Funktion zur Beschreibung der Abhängigkeit zwischen d und RTT erhalten wird. In dem obigen Fall einer linearen Abhängigkeit entspricht dabei der Parameter b dem Minimalwert min und a entspricht dem Wert (max - min)/ (dmax - dmin).

Nachdem basierend auf dem aktuellen Minimal- und Maximalwert von RTT die Funktion f(d) bestimmt wurde, wird die aktuelle Position des mobilen Objekts ermittelt, was in dem Diagramm der Fig. 4 verdeutlicht ist. Basierend auf dem aktuellen Wert cur der Laufzeit RTT wird dann basierend auf der aktuell vorliegenden Funktion f(d) der momentane Abstand dcur zwischen dem mobilen Objekt und der gerade betrachteten Basisstation bestimmt. Dies geschieht dadurch, dass der Schnittpunkt der von dem Wert cur ausgehenden horizontalen Linie mit der Funktion f(d) bestimmt wird und für diesen Schnittpunkt der entsprechende Wert dcur entlang der Abszisse ermittelt wird. Auf diese Weise wird kontinuierlich bei der Bewegung des Objekts zum einen eine Kalibrierung durch entsprechende Skalierung der Funktion f(d) und zum anderen eine Positionsbestimmung durchgeführt, wobei die Positionsbestimmung immer besser wird, je länger sich das Objekt in der Umgebung bewegt, da hierdurch sichergestellt wird, dass das Objekt tatsächlich auch Positionen mit minimalem und maximalem Abstand zu den jeweiligen Basisstationen eingenommen hat.

Zusammenfassend läuft die soeben beschriebene Kalibrierung und gleichzeitige Lokalisation eines mobilen Objekts derart ab, dass sich das Objekt an verschiedene unbekannte Positionen bewegt, wobei für jede neue unbekannte Position die Laufzeiten RTT bezüglich jeder Basisstation erfasst werden. Anschließend werden die neu erfassten Werte mit den aktuellen Werten für die minimale und maximale Laufzeit verglichen. Ist der aktuelle Wert der RTT für eine Basisstation kleiner als der aktuelle minimale Wert, wird der minimale Wert durch den neuen aktuellen Wert ersetzt. Ist der aktuelle Wert der RTT für eine Basisstation größer als der aktuelle maximale Wert, wird der maximale Wert durch den aktuellen Wert ersetzt. Erfolgt eine solche Ersetzung des minimalen bzw. maximalen Werts, wird daraufhin auch die funktionale Abhängigkeit f(d) geeignet an den neuen minimalen bzw. maximalen Wert angepasst. Schließlich wird basierend auf der Funktion f(d) auch noch die aktuelle Position abgeschätzt, wie dies anhand des Beispiels der Fig. 4 beschrieben wurde. Man erhält somit bei der Kalibrierung eine Schätzung der Abstände des mobilen Objekts von jeder Basisstation. Die Daten jeder Basisstation werden dann in einer Verarbeitungseinheit, beispielsweise in einem zentralen Server, an den die Daten von jeder Basisstation übermittelt werden, zusammengeführt. Dort wird schließlich die Position des mobilen Objekts durch geeignete, aus dem Stand der Technik bekannte Algorithmen, insbesondere durch Multilateration (z.B. Trilateration), bestimmt.

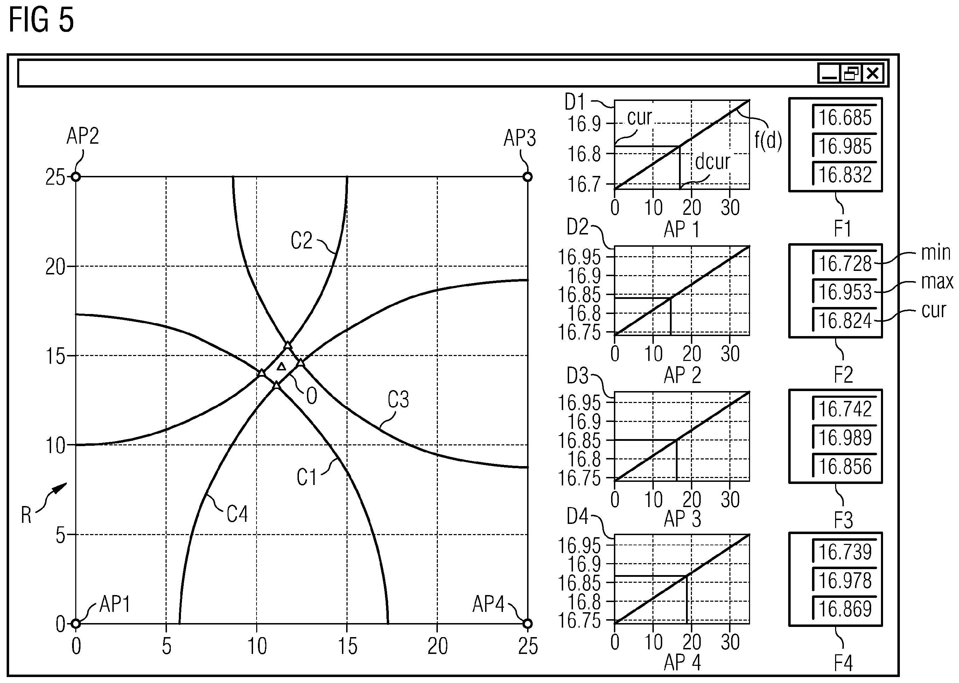

Fig. 5 zeigt ein Beispiel einer Benutzeroberfläche, auf der dem Benutzer die Ergebnisse der Kalibrierung bzw. Positionsschätzung visuell wiedergegeben werden. Die dargestellten Bezugszeichen sind dabei nicht Teil der Benutzeroberfläche. Auf der Benutzeroberfläche, welche auf einem Monitor angezeigt wird, ist die betrachtete vorbestimmte Umgebung, in der sich das Objekt 0 bewegt, als quadratische Fläche R angedeutet. Es wird dabei eine quadratische Fläche mit einer Kantenlänge von 25 m betrachtet. In den Ecken dieser Fläche befindet sich jeweils eine entsprechende Basisstation AP1, AP2, AP3 und AP4. Dem Benutzer wird die aktuell ermittelte Position des Objekts O durch ein kleines Dreieck innerhalb der quadratischen Fläche R angedeutet.

Neben der quadratischen Fläche R sind in der Benutzeroberfläche entsprechende Diagramme D1, D2, D3 und D4 enthalten, welche die aktuell ermittelte funktionale Abhängigkeit zwischen dem Abstand d der jeweiligen Basisstation von der Laufzeit RTT wiedergibt. Das Diagramm D1 bezieht sich dabei auf die Basisstation AP1, das Diagramm D2 auf die Basisstation AP2, das Diagram D3 auf die Basisstation AP3 und das Diagramm D4 auf die Basisstation AP4. In einem jeweiligen Diagramm ist entlang der Abszisse der Abstand d und entlang der Ordinate die Laufzeit RTT angedeutet. Die einzelnen Diagramme enthalten die Funktion f(d) und entsprechen somit Ausführungsformen des in Fig. 4 dargestellten Diagramms, wobei nunmehr jedoch im Unterschied zur Fig. 4 eine lineare Abhängigkeit zwischen dem Abstand d und der Laufzeit RTT angenommen wird. Die einzelnen Funktionen wurden - wie oben beschrieben - basierend auf der Annahme einer linearen Abhängigkeit und durch eine Skalierung basierend auf den aktuell vorliegenden Minimal- und Maximalwerten von RTT der jeweiligen Basisstation bestimmt. Basierend auf den jeweiligen Funktionen wurde ferner aus dem aktuellen Wert cur für die Laufzeit RTT der aktuelle Abstand dcur des mobilen Objekts von der betreffenden Basisstation bestimmt. Die Größen f(d), cur und dcur sind aus Übersichtlichkeitsgründen nur in dem oberen Diagramm D1 durch entsprechende Bezugszeichen angedeutet. Neben den jeweiligen Diagrammen D1 bis D4 sind ferner entsprechende Felder F1 bis F4 angedeutet. Jedes der Felder enthält dabei drei Werte, wobei der oberste Wert den Minimalwert min von RTT, der mittlere Wert den Maximalwert max von RTT und der untere Wert den aktuellen Wert cur von RTT wiedergibt. Aus Übersichtlichkeitsgründen sind die entsprechenden Werte nur für das Feld F2 mit den entsprechenden Bezugszeichen bezeichnet.

In der quadratischen Fläche R sind ferner die entsprechend ermittelten Abstände dcur für jede Basisstation durch Kreissegmente C1, C2, C3 bzw. C4 mit Mittelpunkt um die Position der jeweiligen Basisstationen AP1, AP2, AP3 bzw. AP4 wiedergegeben. Mit den aus der oben genannten deutschen Patentanmeldung mit der Nr. 10 2008 004 257.9 bzw. aus der PCT-Anmeldung PCT/EP2008/068162 bekannten Verfahren wird dann die Position des Objekts 0 bestimmt, wobei diese Position in der Ausführungsform der Fig. 5 in geeigneter Weise gemittelt ist, so dass die Position im Zentrum des trapezförmigen Bereichs liegt, der durch die Schnittpunkte zwischen den einzelnen Kreissegmenten C1 bis C4 gebildet wird. Im Idealfall (d.h. bei einer Positionsschätzung ohne Messfehler) würden sich die einzelnen Kreise C1 bis C4 in einem einzigen Punkt schneiden.

Die soeben beschriebene Variante des erfindungsgemäßen Verfahrens weist eine Reihe von Vorteilen auf. Insbesondere wird eine einfache automatisierte Kalibrierung eines Lokalisationssystems geschaffen, welche wesentlich kostengünstiger als herkömmliche Kalibrierungen durchgeführt werden kann. Dies liegt daran, dass weniger Zeit für die Kalibrierung benötigt wird, da das Objekt nicht mehr in feste vorbekannte Positionen bewegt werden muss. Mit der erfindungsgemäßen Kalibrierung können dabei erhebliche Kosten eingespart werden, da der Anteil der Kalibrierung an den TCO-Kosten (TCO = Total Costs of Ownership) eines Lokalisationssystems sehr groß ist. Ferner muss die Kalibrierung auch nicht mehr durch Experten durchgeführt werden, sondern eine beliebige Person kann das mobile Objekt in der vorbestimmten Umgebung mit sich tragen, wobei dann ohne Benutzereingriff durch die Erfassung entsprechender Laufzeiten RTT die Kalibrierung durchgeführt wird. Es muss dabei lediglich sichergestellt werden, dass der Benutzer während der Kalibrierung auch einen großen Bereich der vorbestimmten Umgebung abläuft. Bei der Verwendung der oben beschriebenen Kalibrierung kann auf teure Rekalibrierungen verzichtet werden, da der Kalibrierungsprozess im Hintergrund kontinuierlich ablaufen kann und sich somit automatisch an neue Umgebungsbedingungen anpasst.

Die Erfinder konnten ferner zeigen, dass mit der oben beschriebenen Ausführungsform des erfindungsgemäßen Verfahrens gute Ergebnisse sowohl unter Bedingungen erhalten werden, bei denen das Objekt in Sichtlinie mit den Basisstationen ist, als auch unter Bedingungen, in denen das Objekt nicht in Sichtlinie mit den Basisstationen ist. Ferner wurde festgestellt, dass im Falle einer Laufzeitmessung ohne Sichtlinie zwischen Basisstation und Objekt der sich hierdurch ergebende Messfehler, der zu einem größeren als dem tatsächlichen Abstand führt, sich oftmals durch weitere Laufzeitmessungen anderer Basisstationen ohne Sichtlinie in anderen Richtungen aufhebt. Somit kann im Durchschnitt sehr gut die korrekte Position des mobilen Objekts in der vorbestimmten Umgebung ermittelt werden.

Im Folgenden wird eine vereinfachte weitere Variante des erfindungsgemäßen Verfahrens zur Kalibrierung eines Lokalisationssystems beschrieben. Es wird dabei davon ausgegangen, dass alle Basisstationen in dem System die gleichen Eigenschaften aufweisen, d.h. dass für alle Basisstationen die gleiche Abhängigkeit basierend auf einer entsprechenden Funktion f(d) vorliegt, die zunächst nicht bekannt ist. In diesem Fall erfolgt die Kalibrierung dadurch, dass das mobile Objekt an einer bekannten Position in der vorbestimmten Umgebung angeordnet wird, bei der die Abstände zu den einzelnen Basisstationen bekannt und unterschiedlich sind. Ein solches Szenario ist auch in Fig. 1 gezeigt. Gemäß dieser Figur weist das mobile Objekt 0 zu jeder der Basisstationen AP1 bis AP4 unterschiedliche Abstände auf. Die Kalibrierung läuft dabei derart ab, dass das mobile Objekt an der bekannten Position angeordnet wird und anschließend die entsprechenden Messwerte der Laufzeiten RTT ermittelt werden. Die einzelnen Messwerte mit den entsprechend bekannten Abständen können dann in einem Diagramm eingetragen werden, entlang dessen Abszisse der Abstand d des Objekts zur Basisstation und entlang dessen Ordinate die ermittelte Laufzeit RTT aufgetragen ist. Da, wie oben erwähnt, die Eigenschaften der Basisstationen gleich sind, kann dann durch eine Approximation basierend auf den in das Diagramm eingetragenen Messwerten, insbesondere durch eine Interpolation, die entsprechende Funktion f(d) abgeleitet werden, welche für alle Basisstationen gültig ist. Mit dieser Funktion können anschließend bei der Bewegung des Objekts die entsprechenden Abstände des Objekts zu den Basisstationen über die erfassten Laufzeiten RTT abgeleitet werden. Basierend auf diesen Abständen kann dann wiederum mittels Multilateration die Position des Objekts bestimmt werden. Die soeben beschriebene zweite Variante der Erfindung weist den besonderen Vorteil auf, dass eine Kalibrierung lediglich an einer einzelnen vorbestimmten Position mit bekannten Koordinaten durchgeführt werden kann. Man macht sich hierbei die Erkenntnis zunutze, dass eine vorgegebene funktionale Abhängigkeit zwischen den Abständen des mobilen Objekts zu einer Basisstation und den entsprechend erfassten Laufzeiten RTT besteht.

Die zweite Variante der Erfindung kann gegebenenfalls auch dazu verwendet werden, um vorab die funktionale Abhängigkeit zwischen dem Abstand und der Laufzeit für eine entsprechende Basisstation zu bestimmen, wobei diese funktionale Abhängigkeit dann in geeigneter Weise mit der oben beschriebenen ersten Variante des erfindungsgemäßen Verfahrens während der Kalibrierung skaliert wird.

**Patentansprüche**

1. Verfahren zur rechnergestützten Kalibrierung eines laufzeitbasierten Lokalisationssystems, wobei in dem Lokalisationssystem über die Erfassung von laufzeitbasierten Größen (RTT) von mehreren Basisstationen (AP1, AP2, ..., AP4) eines Funknetzes die Position eines mobilen Objekts (0) in einer vorbestimmten Umgebung bestimmbar ist, wobei die laufzeitbasierte Größe (RTT) einer jeweiligen Basisstation (AP1, AP2, ..., AP4) die Laufzeit von Signalen zwischen einer Funkeinheit des mobilen Objekts (0) und der jeweiligen Basisstation (AP1, AP2, ..., AP4) repräsentiert,
dadurch charakterisiert dass :

a) das mobile Objekt (0) in der vorbestimmten Umgebung bewegt wird und dabei zu einer Mehrzahl von Messzeitpunkten die laufzeitbasierten Größen (RTT) der jeweiligen Basisstationen (AP1, AP2, ..., AP4) erfasst werden;
b) der Minimalwert (min) der laufzeitbasierten Größen (RTT) einer jeweiligen Basisstation (AP1, AP2, ..., AP4) einem vorgegebenen Minimalabstand (dmin) des mobilen Objekts (0) zu der jeweiligen Basisstation (AP1, AP2, ..., AP4) zugeordnet wird und der Maximalwert (max) der laufzeitbasierten Größen (RTT) einer jeweiligen Basisstation (AP1, AP2, ..., AP4) einem vorgegebenen Maximalabstand (dmax) des mobilen Objekts (0) zu der jeweiligen Basisstation (AP1, AP2, ..., AP4) zugeordnet wird;
c) für eine jeweilige Basisstation (AP1, AP2, ..., AP4) eine vorgegebene Abhängigkeit zwischen den Abständen (d) des mobilen Objekts (0) zu der jeweiligen Basisstation (AP1, AP2, ..., AP4) und den laufzeitbasierten Größen (RTT) der jeweiligen Basisstation (AP1, AP2, ..., AP4) auf die Zuordnung des Minimalwerts (min) zu dem Minimalabstand (dmin) und des Maximalwerts (max) zu dem Maximalabstand (dmax) skaliert wird, wobei die skalierte Abhängigkeit (f(d)) bei der Positionsbestimmung des mobilen Objekts (0) zur Ermittlung der Abstände (d) des mobilen Objekts (0) zu den Basisstationen (AP1, AP2, ..., AP4) aus den laufzeitbasierten Größen (RTT) dient.

2. Verfahren nach Anspruch 1, bei dem die vorgegebene Abhängigkeit eine funktionale Abhängigkeit mit einem oder mehreren freien Parametern ist, wobei bei der Skalierung die freien Parameter an die Zuordnung des Minimalwerts (min) zu dem Minimalabstand (dmin) und des Maximalwerts (max) zum Maximalabstand (dmax) angepasst werden.

3. Verfahren nach Anspruch 1 oder 2, bei dem die vorgegebene Abhängigkeit linear oder logarithmisch ist oder durch ein Polynom repräsentiert wird.

4. Verfahren nach einem der vorhergehenden Ansprüche, bei dem die laufzeitbasierten Größen (RTT) von mindestens drei Basisstationen (AP1, AP2, ..., AP4) erfasst werden.

5. Verfahren nach einem der vorhergehenden Ansprüche, bei dem die laufzeitbasierten Größen (RTT) jeweils der Zeitspanne entsprechen, welche ab dem Aussenden eines Anforderungssignals von der jeweiligen Basisstation (AP1, AP2, ..., AP4) an die Funkeinheit des mobilen Objekts (0) bis zum Empfang eines von der Funkeinheit in Antwort auf das Anforderungssignal ausgesendeten Antwortsignals bei der jeweiligen Basisstation (AP1, AP2, ..., AP4) vergeht.

6. Verfahren nach einem der vorhergehenden Ansprüche, bei dem das Funknetz auf einem WLAN-Standard oder einem RFID-Standard basiert.

7. Verfahren nach einem der vorhergehenden Ansprüche, bei dem die Kalibrierung iterativ während der Bewegung des mobilen Objekts (0) durchgeführt wird, wobei in jedem Iterationsschritt die Mehrzahl von Messzeitpunkten um die seit dem letzten Iterationsschritt hinzugekommenen Messzeitpunkte ergänzt wird und basierend auf der sich daraus ergebenden neuen Mehrzahl von Messpunkten der Schritt b) und zumindest bei einer Veränderung des Minimalwerts (min) und/oder des Maximalwerts (max) gegenüber dem letzten Iterationsschritt der Schritt c) durchgeführt wird.

8. Verfahren zur rechnergestützten Lokalisation eines mobilen Objekts (0) mit einem laufzeitbasierten Lokalisationssystem, wobei das Lokalisationssystem mit einem Verfahren nach einem der vorhergehenden Ansprüche kalibriert wird und die bei der Kalibrierung bestimmte skalierte Abhängigkeit (f(d)) bei der Positionsbestimmung des mobilen Objekts (0) zur Ermittlung der Abstände (d) des mobilen Objekts (0) zu den Basisstationen (AP1, AP2, ..., AP4) aus den laufzeitbasierten Größen (RTT) verwendet wird.

9. Verfahren nach Anspruch 8, bei dem das Lokalisationssystem mit einem Verfahren nach Anspruch 7 kalibriert wird, wobei während der Kalibrierung eine Positionsbestimmung des mobilen Objekts (0) für zumindest einen Teil der Messzeitpunkte mit Hilfe der im aktuellen Iterationsschritt bestimmten skalierten Abhängigkeit durchgeführt wird.

10. Verfahren zur rechnergestützten Kalibrierung eines laufzeitbasierten Lokalisationssystems, wobei in dem Lokalisationssystem über die Erfassung von laufzeitbasierten Größen (RTT) von mehreren Basisstationen (AP1, AP2, ..., AP4) eines Funknetzes die Position eines mobilen Objekts (0) in einer vorbestimmten Umgebung bestimmbar ist, wobei die laufzeitbasierte Größe (RTT) einer jeweiligen Basisstation (AP1, AP2, ..., AP4) die Laufzeit von Signalen zwischen einer Funkeinheit des mobilen Objekts (0) und der jeweiligen Basisstation (AP1, AP2, ..., AP4) repräsentiert und
dadurch charakterisiert, dass
die jeweiligen Basisstationen (AP1, AP2, ..., AP4) eine identische Abhängigkeit (f(d)) zwischen den Abständen (d) des mobilen Objekts (0) zu der jeweiligen Basisstation (AP1, AP2, ..., AP4) und den laufzeitbasierten Größen (RTT) der jeweiligen Basisstation (AP1, AP2, ..., AP4) aufweisen, wobei:

- das mobile Objekt (0) an eine vorgegebene Position in der vorbestimmten Umgebung bewegt wird, wobei an der vorgegebenen Position die Abstände des mobilen Objekts (0) zu den Basisstationen (AP1, AP2, ..., AP4) bekannt und zumindest teilweise unterschiedlich sind;
- an der vorgegebenen Position die laufzeitbasierte Größen (RTT) der jeweiligen Basisstationen (AP1, AP2, ..., AP4) erfasst werden;
- basierend auf den erfassten laufzeitbasierten Größen (RTT) und den bekannten Abständen des mobilen Objekts (0) zu den jeweiligen Basisstationen (AP1, AP2, ..., AP4) die Abhängigkeit (f(d)) zwischen den Abständen (d) des mobilen Objekts (0) zu einer jeweiligen Basisstation (AP1, AP2, ..., AP4) und den laufzeitbasierten Größen (RTT) der jeweiligen Basisstation (AP1, AP2, ..., AP4) ermittelt wird, wobei die Abhängigkeit (f(d)) bei der Positionsbestimmung des mobilen Objekts (0) zur Ermittlung der Abstände (d) des mobilen Objekts (0) zu den Basisstationen (AP1, AP2, ..., AP4) aus den laufzeitbasierten Größen (RTT) dient.

11. Verfahren nach Anspruch 10, bei dem die Abhängigkeit eine approximierte Funktion (f(d)) ist, welche durch die erfassten laufzeitbasierten Größen (RTT) an den bekannten Abstände des mobilen Objekts (0) zu den jeweiligen Basisstationen (AP1, AP2, ..., AP4) verläuft.

**12.** Verfahren nach Anspruch 10 oder 11, bei dem die laufzeitbasierten Größen (RTT) von mindestens drei Basisstationen (AP1, AP2, ..., AP4) erfasst werden.

**13.** Verfahren nach einem der Ansprüche 10 bis 12, bei dem die laufzeitbasierten Größen (RTT) jeweils der Zeitspanne entsprechen, welche ab dem Aussenden eines Anforderungssignals von der jeweiligen Basisstation (AP1, AP2, ..., AP4) an die Funkeinheit des mobilen Objekts (0) bis zum Empfang eines von der Funkeinheit in Antwort auf das Anforderungssignal ausgesendeten Antwortsignals bei der jeweiligen Basisstation (AP1, AP2, ..., AP4) vergeht.

**14.** Verfahren nach einem der Ansprüche 10 bis 13, bei dem das Funknetz auf einem WLAN-Standard oder einem RFID-Standard basiert.

**15.** Verfahren zur rechnergestützten Lokalisation eines mobilen Objekts mit einem laufzeitbasierten Lokalisationssystem, wobei das Lokalisationssystem mit einem Verfahren nach einem der Ansprüche 10 bis 14 kalibriert wird und die bei der Kalibrierung bestimmte Abhängigkeit (f(d)) bei der Positionsbestimmung des mobilen Objekts zur Ermittlung der Abstände (d) des mobilen Objekts (0) zu den Basisstationen (AP1, AP2, ..., AP4) aus den laufzeitbasierten Größen (RTT) verwendet wird.

**16.** Lokalisationssystem, umfassend eine Erfassungs- und Auswerteeinrichtung, mit der über die Erfassung von laufzeitbasierten Größen (RTT) von mehreren Basisstationen (AP1, AP2, ..., AP4) eines Funknetzes die Position eines mobilen Objekts (0) in einer vorbestimmten Umgebung bestimmbar ist, wobei die laufzeitbasierte Größe (RTT) einer jeweiligen Basisstation (AP1, AP2, ..., AP4) die Laufzeit von Signalen zwischen einer Funkeinheit des mobilen Objekts (0) und der jeweiligen Basisstation (AP1, AP2, ..., AP4) repräsentiert, wobei die Erfassungs- und Auswerteeinrichtung derart ausgestaltet ist, dass mit der Erfassungs- und Auswerteeinrichtung ein Verfahren nach einem der vorhergehenden Ansprüche durchführbar ist.

**Claims**

**1.** Method for the computer-supported calibrating of a propagation-time-based localisation system, wherein the position of a mobile object (0) in a predetermined environment can be determined in the localisation system by registering propagation-time-based variables (RTT) of a plurality of base stations (AP1, AP2, ..., AP4) belonging to a radio network, wherein the propagation-time-based variable (RTT) of a respective base station (AP1, AP2, ..., AP4) represents the propagation time of signals between a radio unit belonging to the mobile object (0) and the respective base station (AP1, AP2, ..., AP4), **characterised in that**:

a) the mobile object (0) is moved within the predetermined environment and the propagation-time-based variables (RTT) of the respective base stations (AP1, AP2, ..., AP4) therein are registered at a plurality of measuring instants;
b) the minimum value (min) of the propagation-time-based variables (RTT) of a respective base station (AP1, AP2, ..., AP4) are assigned to a predefined minimum distance (dmin) of the mobile object (0) from the respective base station (AP1, AP2, ..., AP4) and the maximum value (max) of the propagation-time-based variables (RTT) of a respective base station (AP1, AP2, ..., AP4) is assigned to a predefined maximum distance (dmax) of the mobile object (0) from the respective base station (AP1, AP2, ..., AP4);
c) for a respective base station (AP1, AP2, ..., AP4) a predefined dependence between the distances (d) of the mobile object (0) from the respective base station (AP1, AP2, ..., AP4) and the propagation-time-based variables (RTT) of the respective base station (AP1, AP2, ..., AP4) are scaled to the assigning of the minimum value (min) to the minimum distance (dmin) and of the maximum value (max) to the maximum distance (dmax), wherein the scaled dependence (f(d)) serves to ascertain the distances (d) of the mobile object (0) from the base stations (AP1, AP2, ..., AP4) from the propagation-time-based variables (RTT) when its position is being determined.

**2.** Method according to claim 1, wherein the predefined dependence is a functional dependence having one or more free parameters, wherein the free parameters are matched during scaling to the assignment of the minimum value (min) to the minimum distance (dmin) and of the maximum value (max) to the maximum distance (dmax).

**3.** Method according to claim 1 or 2, wherein the predefined dependence is linear and/or logarithmic and/or is represented by a polynomial.

**4.** Method according to one of the preceding claims, wherein the propagation-time-based variables (RTT) of at least three base stations (AP1, AP2, ..., AP4) are registered.

**5.** Method according to one of the preceding claims, wherein the propagation-time-based variables (RTT) correspond in each case to the length of time elapsing between the transmitting of a request signal by the respective base station (AP1, AP2, ..., AP4) to the radio unit belonging to the mobile object (0) and the reception at the respective base station (AP1, AP2, ..., AP4) of a response signal transmitted by the radio unit in response to the request signal.

6. Method according to one of the preceding claims, wherein the radio network is based on a WLAN standard or an RFID standard.

7. Method according to one of the preceding claims, wherein calibrating is performed iteratively while the mobile object (0) is being moved, wherein the plurality of measuring instants is at each iteration step augmented by the measuring instants that have been added since the last iteration step and, based on the resulting new plurality of measuring instants, step b) is carried out, and at least if there has been a change to the minimum value (min) and/or maximum value (max) compared with the last iteration step, step c) is carried out.

8. Method for the computer-supported localising of a mobile object (0) by means of a propagation-time-based localisation system, wherein the localisation system is calibrated by means of a method according to one of the preceding claims and the scaled dependence (f(d)) that is determined during calibrating is used while the position of the mobile object (0) is being determined for ascertaining the distances (d) of the mobile object (0) from the base stations (AP1, AP2, ..., AP4) from the propagation-time-based variables (RTT).

9. Method according to claim 8, wherein the localisation system is calibrated by means of a method according to claim 7, wherein the position of the mobile object (0) is determined during calibrating (0) for at least a part of the measuring instants with the aid of the scaled dependence determined at the current iteration step.

10. Method for the computer-supported calibrating of a propagation-time-based localisation system, wherein the position of a mobile object (0) in a predetermined environment can be determined in the localisation system by registering propagation-time-based variables (RTT) of a plurality of base stations (AP1, AP2, ..., AP4) belonging to a radio network, wherein the propagation-time-based variable (RTT) of a respective base station (AP1, AP2, AP4) represents the propagation time of signals between a radio unit belonging to the mobile object (0) and the respective base station (AP1, AP2, ..., AP4) and **characterised in that** the respective base stations (AP1, AP2, ..., AP4) have an identical dependence (f(d)) between the distances (d) of the mobile object (0) from the respective base station (AP1, AP2, ..., AP4) and the propagation-time-based variables (RTT) of the respective base station (AP1, AP2, ..., AP4), wherein:

- the mobile object (0) is moved to a predefined position within the predetermined environment, wherein the distances of the mobile object (0) from the base stations (AP1, AP2, ..., AP4) at the predefined position are known and at least in part different;
- the propagation-time-based variables (RTT) of the respective base stations (AP1, AP2, ..., AP4) are registered at the predefined position;
- the dependence (f(d)) between the distances (d) of the mobile object (0) from a respective base station (AP1, AP2, ..., AP4) and the propagation-time-based variables (RTT) of the respective base station (AP1, AP2, ..., AP4) is ascertained based on the registered propagation-time-based variables (RTT) and the known distances of the mobile object (0) from the respective base stations (AP1, AP2, ..., AP4), wherein the dependence (f(d)) serves to ascertain the distances (d) of the mobile object (0) from the base stations (AP1, AP2, ..., AP4) from the propagation-time-based variables (RTT) when its position is being determined.

11. Method according to claim 10, wherein the dependence is an approximated function (f(d)) that passes through the registered propagation-time-based variables (RTT) at the known distances of the mobile object (0) from the respective base stations (AP1, AP2, ..., AP4).

12. Method according to claim 10 or 11, wherein the propagation-time-based variables (RTT) of at least three base stations (AP1, AP2, ..., AP4) are registered.

13. Method according to one of claims 10 to 12, wherein the propagation-time-based variables (RTT) correspond in each case to the length of time elapsing between the transmitting of a request signal by the respective base station (AP1, AP2, ..., AP4) to the radio unit belonging to mobile object (0) and the reception at the respective base station (AP1, AP2, ..., AP4) of a response signal transmitted by the radio unit in response to the request signal.

14. Method according to one of claims 10 to 13, wherein the radio network is based on a WLAN standard or an RFID standard.

15. Method for the computer-supported localising of a mobile object by means of a propagation-time-based localisation system, wherein the localisation system is calibrated by means of the method according to one of claims 10 to 14 and the dependence (f(d)) that is determined during calibrating is used while the position of the mobile object is being determined for ascertaining the distances (d) of the mobile object (0) from the base stations (AP1, AP2, ..., AP4) from the propagation-time-based variables (RTT).

16. Localisation system comprising a registering and evaluating device by means of which the position of a mobile object (0) in a predetermined environment can be determined by registering propagation-time-based variables (RTT) of a plurality of base stations (AP1, AP2, ..., AP4) belonging to a radio network, wherein the propagation-time-based variable (RTT) of a respective base station (AP1, AP2, ..., AP4) represents the propagation time of signals between a radio unit belonging to the mobile object (0) and the respective base station (AP1, AP2, ..., AP4), wherein the registering and evaluating device is embodied such that a method according to one of the preceding claims can be executed therewith.

## Revendications

1. Procédé de calibrage assisté par ordinateur d'un système de localisation basée sur le temps de propagation, la position d'un objet mobile (O) dans un environnement prédéterminé pouvant être déterminée dans le système de localisation en enregistrant des grandeurs basées sur le temps de propagation (RTT) de plusieurs stations de base (AP1, AP2, ..., AP4) d'un réseau de radiocommunications, la grandeur basée sur le temps de propagation (RTT) d'une station de base respective (AP1, AP2, ..., AP4) représentant le temps de propagation de signaux entre une unité radio de l'objet mobile (O) et la station de base respective (AP1, AP2, ..., AP4),
**caractérisé en ce que** :

    a) l'objet mobile (O) est déplacé dans l'environnement prédéterminé et, en même temps, les grandeurs basées sur le temps de propagation (RTT) des stations de base respectives (AP1, AP2, ..., AP4) sont enregistrées à une pluralité d'instants de mesure ;
    b) la valeur minimale (min) des grandeurs basées sur le temps de propagation (RTT) d'une station de base respective (AP1, AP2, ..., AP4) est associée à une distance minimale prédéfinie (dmin) de l'objet mobile (O) à la station de base respective (AP1, AP2, ..., AP4) et la valeur maximale (max) des grandeurs basées sur le temps de propagation (RTT) d'une station de base respective (AP1, AP2, ..., AP4) est associée à une distance maximale prédéfinie (dmax) de l'objet mobile (O) à la station de base respective (AP1, AP2, ..., AP4) ;
    c) pour une station de base respective (AP1, AP2, ..., AP4), une dépendance prédéfinie entre les distances (d) de l'objet mobile (O) à la station de base respective (AP1, AP2, ..., AP4) et les grandeurs basées sur le temps de propagation (RTT) de la station de base respective (AP1, AP2, ..., AP4) étant étalonnée par rapport à l'association de la valeur minimale (min) à la distance minimale (dmin) et de la valeur maximale (max) à la distance maximale (dmax), la dépendance étalonnée (f(d)) servant à déterminer les distances (d) de l'objet mobile (O) par rapport aux stations de base (AP1, AP2, ..., AP4) à partir des grandeurs basées sur le temps de propagation (RTT) lors de la détermination de la position de l'objet mobile (O).

2. Procédé selon la revendication 1, dans lequel la dépendance prédéfinie est une dépendance fonctionnelle avec un ou plusieurs paramètres libres, les paramètres libres étant, lors de l'étalonnage, adaptés à l'association de la valeur minimale (min) à la distance minimale (dmin) et de la valeur maximale (max) à la distance maximale (dmax).

3. Procédé selon la revendication 1 ou 2, dans lequel la dépendance prédéfinie est linéaire ou logarithmique, ou est représentée par un polynôme.

4. Procédé selon l'une des revendications précédentes, dans lequel les grandeurs basées sur le temps de propagation (RTT) d'au moins trois stations de base (AP1, AP2, ..., AP4) sont enregistrées.

5. Procédé selon l'une des revendications précédentes, dans lequel les grandeurs basées sur le temps de propagation (RTT) correspondent à chaque fois à l'intervalle de temps qui s'étale de l'envoi d'un signal de demande de la station de base respective (AP1, AP2, ..., AP4) à l'unité radio de l'objet mobile (O) jusqu'à la réception par la station de base respective (AP1, AP2, ..., AP4) d'un signal de réponse émis par l'unité radio en réponse au signal de demande.

6. Procédé selon l'une des revendications précédentes, dans lequel le réseau de radiocommunications est basé sur un standard WLAN ou un standard RFID.

7. Procédé selon l'une des revendications précédentes, dans lequel le calibrage est effectué de manière itérative pendant le déplacement de l'objet mobile (O), la pluralité d'instants de mesure étant, dans chaque étape d'itération, complétée des instants de mesure s'étant ajoutés depuis la dernière étape d'itération et, sur la base de la nouvelle pluralité de points de mesure en résultant, l'étape b) et, au moins lors d'une modification de la valeur minimale (min) et/ou de la valeur maximale (max) par rapport à la dernière étape d'itération, l'étape c) étant exécutées.

8. Procédé de localisation assistée par ordinateur d'un objet mobile (O) grâce à un système de localisation basée sur le temps de propagation, le système de localisation étant calibré à l'aide d'un procédé selon l'une des revendications précédentes et la dépendance étalonnée (f(d)) définie lors du calibrage étant utilisée lors de la détermination de la position de l'objet mobile (O) pour déterminer les distances (d) de l'objet mobile (O) aux stations de base (AP1, AP2, ..., AP4) à partir des grandeurs basées sur le temps de propagation (RTT).

9. Procédé selon la revendication 8, dans lequel le système de localisation est calibré à l'aide d'un procédé selon la revendication 7, une détermination de la position de l'objet mobile (O) étant effectuée, pendant le calibrage, pour au moins une partie des instants de mesure à l'aide de la dépendance étalonnée définie dans l'état d'itération en cours.

10. Procédé de calibrage assisté par ordinateur d'un système de localisation basée sur le temps de propagation, la position d'un objet mobile (O) dans un environnement prédéterminé pouvant être déterminée dans le système de localisation en enregistrant des grandeurs basées sur le temps de propagation (RTT) de plusieurs stations de base (AP1, AP2, ..., AP4) d'un réseau de radiocommunications, la grandeur basée sur le temps de propagation (RTT) d'une station de base respective (AP1, AP2, ..., AP4) représentant le temps de propagation de signaux entre une unité radio de l'objet mobile (O) et la station de base respective (AP1, AP2, ..., AP4),
**caractérisé en ce que**
la dépendance (f(d)) entre les distances (d) de l'objet mobile (O) à la station de base respective (AP1, AP2, ..., AP4) et les grandeurs basées sur le temps de propagation (RTT) de la station de base respective (AP1, AP2, ..., AP4) étant identique pour les stations de base respectives (AP1, AP2, ..., AP4) :

- l'objet mobile (O) étant déplacé à une position prédéfinie dans l'environnement prédéterminé, les distances de l'objet mobile (O) aux stations de base (AP1, AP2, ..., AP4) étant connues à la position prédéfinie et étant, au moins en partie, différentes ;
- les grandeurs basées sur le temps de propagation (RTT) des stations de base respectives (AP1, AP2, ..., AP4) étant enregistrées à la position prédéfinie ;
- la dépendance (f(d)) entre les distances (d) de l'objet mobile (O) à une station de base respective (AP1, AP2, ..., AP4) et les grandeurs basées sur le temps de propagation (RTT) de la station de base respective (AP1, AP2, ..., AP4) étant déterminée sur la base des grandeurs basées sur le temps de propagation (RTT) enregistrées et des distances connues de l'objet mobile (O) aux stations de base respectives (AP1, AP2, ..., AP4), la dépendance (f(d)) servant à déterminer les distances (d) de l'objet mobile (O) aux stations de base (AP1, AP2, ..., AP4) à partir des grandeurs basées sur le temps de propagation (RTT) lors de la détermination de la position de l'objet mobile (O).

11. Procédé selon la revendication 10, dans lequel la dépendance est une fonction approximée (f(d)) qui passe par les grandeurs basées sur le temps de propagation (RTT) enregistrées aux distances connues de l'objet mobile (O) aux stations de base respectives (AP1, AP2, ..., AP4).

12. Procédé selon la revendication 10 ou 11, dans lequel les grandeurs basées sur le temps de propagation (RTT d'au moins trois stations de base (AP1, AP2, ..., AP4) sont enregistrées.

13. Procédé selon l'une des revendications 10 à 12, dans lequel les grandeurs basées sur le temps de propagation (RTT) correspondent à chaque fois à l'intervalle de temps qui s'étale de l'envoi d'un signal de demande de la station de base respective (AP1, AP2, ..., AP4) à l'unité radio de l'objet mobile (O) jusqu'à la réception par la station de base respective (AP1, AP2, ..., AP4) d'un signal de réponse émis par l'unité radio en réponse au signal de demande.

14. Procédé selon l'une des revendications 10 à 13, dans lequel le réseau de radiocommunications est basé sur un standard WLAN ou un standard RFID.

15. Procédé de localisation assistée par ordinateur d'un objet mobile à l'aide d'un système de localisation basée sur le temps de propagation, le système de localisation étant calibré à l'aide d'un procédé selon l'une des revendications 10 à 14 et la dépendance (f(d)) définie lors du calibrage étant utilisée lors de la détermination de la position de l'objet mobile pour déterminer les distances (d) de l'objet mobile (O) aux stations de base (AP1, AP2, ..., AP4) à partir des grandeurs basées sur le temps de propagation (RTT).

16. Système de localisation comprenant un dispositif d'enregistrement et d'analyse grâce auquel la position d'un objet mobile (O) dans un environnement prédéterminé peut être déterminée en enregistrant des grandeurs basées sur le temps de propagation (RTT) de plusieurs stations de base (AP1, AP2, ..., AP4) d'un réseau de radiocommunications, la grandeur basée sur le temps de propagation (RTT) d'une station de base respective (AP1, AP2, ..., AP4) représentant le temps de propagation de signaux entre une unité radio de l'objet mobile (O) et la station de base respective (AP1, AP2, ..., AP4), le dispositif d'enregistrement et d'analyse étant conçu de manière à permettre l'exécution d'un procédé selon l'une des revendications précédentes.

# FIG 1

# FIG 2

## FIG 3

## FIG 4

# FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006045350 A1
- DE 102008004257
- EP 2008068162 W

**In der Beschreibung aufgeführte Nicht-Patentliteratur**

- IEEE 802.11 Distance Estimation Based on RTS/CTS Two-Frame Exchange Mechanism. **BA-HILLO A. et al.** 2009 IEEE 69th Vehicular Technology Conference. IEEE, 26. April 2009, 1-5

- **IZQUIERDO F. et al.** Performance evaluation of a TOA-based trilateration method to locate terminals in WLAN. *International Symposium on wireless pervasive computing,* 16. Januar 2006, vol. XX, 1-6